# EUROPEAN PATENT APPLICATION

(11) **EP 0 924 919 A2**
(43) Date of publication of application: **23.06.1999**
(21) Application number: 98310275.7
(22) Date of filing: 15.12.1998
(51) Int. Cl.: H04M 7/00, H04M 3/42, H04M 7/12, H04Q 3/00

(54) **System and method for centrex translation**

(30) Priority: 18.12.1997 US 994014
(71) Applicant: NORTHERN TELECOM LIMITED, Montreal, Quebec H2Y 3Y4 (CA)
(72) Inventor: Rasmussen, Tristen, Ottawa, Ontario K1S 1R4 (CA)
(74) Representative: Williamson, Brian

(57) **Abstract**

A dynamic Centrex environment is provided to members of a business group using a centralized Centrex translation server. The TCP/IP transport mechanism is used to direct AIN queries from a central office switch providing telephone service to the business group to the Centrex translation server, which is typically located at the customer site. A World-wide-Web (WWW) provisioning interface is provided to allow for frequent changes to the Centrex data stored by the centralized Centrex translation server.

## Description

### Field of the Invention

This invention relates to the private network service features offered by telephone companies to business customers known as Centrex.

### Background of the Invention

Centrex is a service offered by telephone companies that adds to a normal telephone line a package of features normally sought by business customers. For example, Centrex enables customers within a business group to telephone each other by dialing extension numbers (telephone numbers made up of two, three or four digits), instead of the full seven or ten digit telephone number normally associated with a called station (known as National Numbering Plan (NANP) format). Centrex typically provides business services similar to those of a Private Business Exchange (PBX) without requiring the customer to purchase and maintain a private exchange.

The prior art teaches several means of implementing centrex service. The most common means is to centralize Centrex features at a central office of the public switched telephone network (PSTN). However, such a system does not function where members of the business group are located at geographically disperse locations. The central office exchange containing the Centrex data concerning the business group is incapable of offering business features to stations connected to other central office exchanges.

The problem of multiple locations (known as "area wide Centrex") has been addressed in two principle ways. Prior art systems have been developed to extend Centrex service to remote customer locations by means of dedicated private tie line trunk facilities, where the customer owns the trunk and pays a fixed price for its use. In addition, Centrex traffic can be switched via CCS7 (also called Signalling System No. 7) trunks, where the customer pays for each use.

Several other prior art patents have provided for area wide Centrex while making use of the CCS7, and the Advanced Intelligence Network (AIN) infrastructure. A CCS7 network typically consists of a plurality of nodes interconnected by signalling links. CCS7 nodes include service switching points (SSP), service control points (SCP) and signal transfer points (STP). CCS7 partitions the communication traffic so the signalling component travels on signalling links and the voice and data components travel on voice trunks between SSPs or central office switches.

An area wide Centrex service using the AIN network was described in U.S. patent no. 5,247,571, which issued on September 21, 1993 to Kay et al. In that patent, service features were migrated from local central office switches to a central data base stored in an SCP. In a first aspect of this patent, there is a method of providing Centrex services to business groups connected to multiple central offices. At least one of the local communication lines connected to each of the central offices is designated as members of a business group. A central database (preferably located at an SCP) stores Centrex data associated with the business group, such as extension numbers and associated directory numbers. This Centrex data permits a business member to dial an extension number consisting of fewer than the minimum number of digits required for a complete telephone number. Thus, two, three, or four digits could be dialled to reach a called station, rather than the usual seven or ten digits. A request for service is received in one of the central offices from a member of the business group. The method further includes the steps of recognizing that the service request originates from a member of the business group, and, by the use of AIN triggers, accessing the central database to obtain call processing data associated with the business group for a selected Centrex service feature (the "translation step"). The service processing method then provides the selected Centrex service feature to the member of the business group based on the accessed call processing data.

In this prior art patent, Centrex data is passed between the cental office switch and the SCP using the Transactions Capability Applications Part (TCAP) protocol associated with CCS7 messaging. TCAP comprises the set of request, response and control messages and associated procedures that enable one SSP to initiate a transaction on another node connected to the CCS7 network. However, the CCS7 network is not designed solely to transport Centrex data to/from central offices. The CCS7 network is primarily used to transport "out-of-band" signalling for call setup, and to implement sophisticated, network-based intelligent services such as 800, AIN, and Local Number Portability (LNP).

As the demand for network-based intelligent services has increased, the traffic levels of the typical CCS7 network have expanded dramatically. This has led to over-capacity in signalling links, as well as SCPs. It is estimated that traffic levels of the CCS7 network will increase dramatically when LNP is introduced. LNP is the ability for a customer to change location, service provider, or service while retaining their telephone directory number. The FCC is requiring LNP availability on a permanent basis to begin on October 1, 1997 and to be completed for the top 100 metropolitan statistical areas by December 31, 1998. As more users are given LNP capability, the capacity of the CCS7 network is expected to be stretched to the limit.

The area wide Centrex solution of this prior art patent requires the intervention of the telephone company in order to modify the Centrex data. For example, the telephone company would have to reprogram the SCP in response to a customer request to add, delete or alter Centrex data. This is particularly inconvenient where a business customer wishes to make frequent, temporary changes to Centrex data to accommodate business travel, work at home arrangements, etc.

There are other area wide Centrex solutions in the prior art. In U.S. Patent No. 5,422,941, which issued on June 6, 1995 to Hasenauer et al. there is described a method that uses two translation steps for Centrex data, instead of just one. A switching office receiving a short extension number as part of a request for service uses Centrex translation data stored therein to translate the extension number into another number, referred to as a composite number or as a Centrex number. The composite number or Centrex number will consist of at least the minimum number of digits normally necessary to uniquely identify a destination line, and will trigger AIN processing to provide the desired Centrex service.

In U.S. Patent No. 5,539,817, which issued on July 23, 1996 to Wilkes, there is described a method of providing multi-switch business group services in a wide area centrex toll service, wherein one or more location is served by an inter-exchange carrier. Once again, the Centrex data associated with the business group is stored and maintained on public CCS7 facilities.

Accordingly, a need exists to migrate Centrex data from public CCS7 facilities (such as a central office switch or SCP) to private facilities that can be owned and maintained by the business group itself.

### Summary of the Invention

It is therefore an object of the present invention to provide a system and method for Centrex translation that minimizes involvement with the public switched telephone network, including the CCS7 network. In summary, the present invention provides a dynamic Centrex environment to members of a business group using a centralized Centrex translation server that does not form part of the public switched telephone network. The TCP/IP transport mechanism is used to direct AIN queries from a central office switch providing telephone service to the business group to the Centrex translation server, which is typically located at the customer site. A World-wide-Web (WWW) provisioning interface is provided to allow for frequent changes to the Centrex data.

The present invention provides a centrex system comprising a group of telephone subscribers forming a business group connected by local telephone lines to a central office, said central office being connected by at least one communication link to a centrex server containing centrex information about said business group, and wherein said centrex server transmits centrex information to said central office over said communication link in TCP/IP format in response to a request made by said central office.

In accordance with another aspect of the present invention there is a method of providing centrex services to a calling party in an AIN-type telecommunications network that includes at least one central office switch having service switching point capability to which terminal equipment of a calling party is connected and a centrex server capable of exchanging data with said central office over communication links; said method comprising the steps of: a. monitoring at said central office switch a condition to detect a request for centrex service through AIN interaction; b. formulating at said central office switch a query request in accordance with said request for centrex service; c. forwarding said query request to said centrex server over said communication links in TCP/IP format; d. processing said query request at said centrex server and generating a centrex response message; e. forwarding said centrex response message to said central office switch over said communication links in TCP/IP format; and f. using said centrex response message to complete a call.

### Brief Description of the Drawings

Preferred embodiments of the invention will now be described with reference to the attached drawings in which:
Figure 1 is a block diagram of a typical CCS7 network configuration;
Figure 2 is a block diagram of a prior art telephone network offering Centrex to business group members located at diverse locations;
Figure 3 is a block diagram of a prior art telephone network offering Centrex services in conjunction with public CCS7 facilities;
Figure 4 is a block diagram of a telephone network offering Centrex services in accordance with the present invention;
Figure 5 is a block diagram showing the steps taken to complete a Centrex call initiated in accordance with the present invention; and
Figure 6 is a block diagram of call progression for the delivery of CTI services implemented in accordance with the Centrex Server of the present invention.

### Detailed Description of the Preferred Embodiments

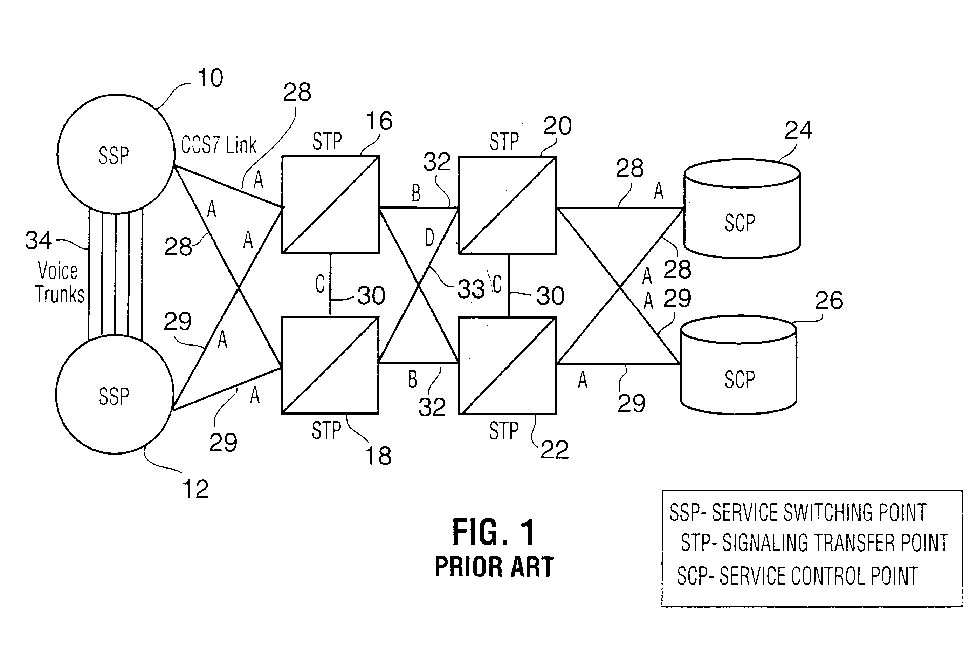

Figure 1 is a block diagram of a typical CCS7 network configuration that supports AIN messaging. There is shown two Service Switching Points (SSPs) 10, 12 connected by means of a multiplicity of voice trunks 34, four Signalling Transfer Points (STPs) 16, 18, 20, 22 in mated pair configuration, and two Service Control Points (SCPs) 24, 26, all of which are interconnected by signalling links 28, 29, 30, 32, 33. A signalling link is the most basic CCS7 entity, and is a direct physical connection between two CCS7 nodes. The messaging rate of a signalling link is either 56 Kbit/s or 64 Kbit/s.

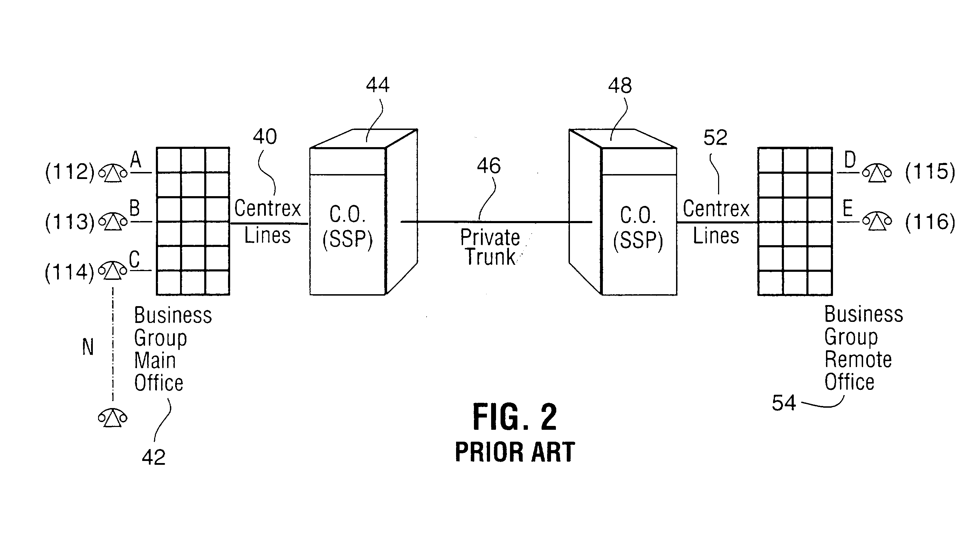

SSPs 10, 12 are telephone switches (such as central office switches shown in Figures 2, 3 and 4) which provide telephony services, and actually host lines and trunks containing voice and data traffic. An example of an SSP switch is the Digital Multiplex Switch (DMS™) manufactured by Nortel™. Unlike other nodes in a CCS7 network, the STPs 16, 18, 20, 22 do not host any lines or trunks, and do not act as a source or ultimate destination for CCS7 messages. STPs 16, 18, 20, 22 are packet switches responsible for receiving incoming CCS7 messages from different SSPs 10, 12 or SCPs 24, 26, and routing the messages to the appropriate destination SSP or SCP. To ensure network availability, STPs 16, 18, 20, 22 are customarily deployed in mated pairs, so that if problems develop in one STP (for example 16), the mated STP (in this case 18) would provide an uninterrupted transfer of application and network management messages to all concerned nodes in the network. In Figure 1, STPs 16, 18 are mated pairs. Similarly, STPs 20, 22 are mated pairs. STPs in a mated pair perform identical functions, and are redundant. Each SSP 10, 12 has two links 28, 29 (or sets of links), one to each STP of a mated pair. SCPs 24, 26 house databases with call routing information for advanced services such as 800 number service, credit card validation, Centrex, AIN and LNP.

The basic principle of AIN is that it allows an SSP in a CCS7 network to stop and request information from an SCP on how to proceed at a number of points (detection points) during the processing of a call. In a CCS7 network supporting AIN, SSPs (such as the central office switches shown in Figures 2, 3 and 4) send and receive messages to/from an SCP (such as SCP 24 or 26) that combines a large consolidated database and the service logic needed to access and use the data to apply call services. SSPs enhanced for AIN use a special set of TCAP messages to dialog with the appropriate AIN service logic in an SCP. In an AIN SSP, upgraded call processing software provides 'hold points' where call processing can be suspended while a query message is sent to an SCP. SCPs that receive query messages from SSPs can instruct SSPs to continue with normal call processing, or over-ride normal call processing and perform specific actions such as: (i) collect more digits, (ii) route the call to a new directory number, (iii) route the call using a specific route list, (iv) play an announcement.

During call processing in an AIN CCS7 network, a number of detection points are reached where call processing can be temporarily suspended. AIN 'triggers' are used to determine whether to send a message to an SCP to invoke the service logic associated with a particular detection point. Depending on the services (Centrex or otherwise) sought by the customer, there may be one or more triggers at each detection point, that is a list of conditions which must be met before an AIN message is sent. At each detection point, a call is checked for subscriptions to triggers. When a subscribed trigger is found, details of the call are checked against the criterion list associated with the trigger. If all criteria are matched, the SSP generates a query to the SCP, and suspends call processing until instructions from the SCP are received. Usually, subsequent call processing for that call will be influenced by the instruction provided by the SCP.

An example AIN trigger is the Termination Attempt (TAT) trigger, which may be assigned to a single directory (virtual) number for all members of a business group. When that virtual number is called, the TAT trigger is reached, causing an SSP to launch an AIN query to an SCP. The SCP receiving the query will search its database for information (such as Centrex information) concerning the virtual number, and return that information to the SSP. The SSP will use the information to resume normal call processing.

In the CCS7 network illustrated in Figure 1, query messages from SSP 10 to SCP 24 in response to an AIN trigger are sent in TCAP format across CCS7 links 28, 32. Upon receipt of the query message, SCP 24 will access its database tables and construct a call control message that is returned to SSP 10 across CCS7 links 28, 32. SSP 10 will then use the call control message to complete the call through the network.

In Figure 2 there is shown a typical configuration of a telephone network offering Centrex services to business group members connected to both a Business Group Main Office 42 and a Business Group Remote Office 54. One of the main Centrex services offered to business group members would be extension number translation, whereby a two, three, four (or more) digit extension number would be assigned to each business group member. A business group member wishing to telephone another group member would only have to dial the extension number of the person he/she was trying to reach, instead of the full telephone number associated with that business group member. For example, business group member using line A would only have to dial the digits '113' to reach business group member using line B. The call initiated by business group member using line A would be transmitted across centrex lines 40 and received at central office 44 where a database table is maintained that associates the three digit extension numbers with the full telephone number associated with each business group member. Central office 44 then retrieves the full telephone number of line B, and completes the call. Likewise, business group member using line D would only have to dial '116' to reach business group member using line E.

Private trunk 46 is used in situations where business group members are located at diverse geographic locations. For instance, business group member using line A can reach business group member using line D by dialing only extension number '115'. In some prior art Centrex systems that do not use private trunks, business group members can only use the extension number translation feature to reach business group members connected to the same central office. The call initiated by business group member using line A would be transmitted across centrex lines 40 and received at central office 44, which retrieves the full telephone number of the business group member B, and switches the call to central office 48 across private trunk 46. Central office 48 then completes the call across Centrex lines 52 to line D.

Other Centrex features that can be accommodated by the prior art system shown in Figure 2 would be call transfer, call forwarding and speed calling.

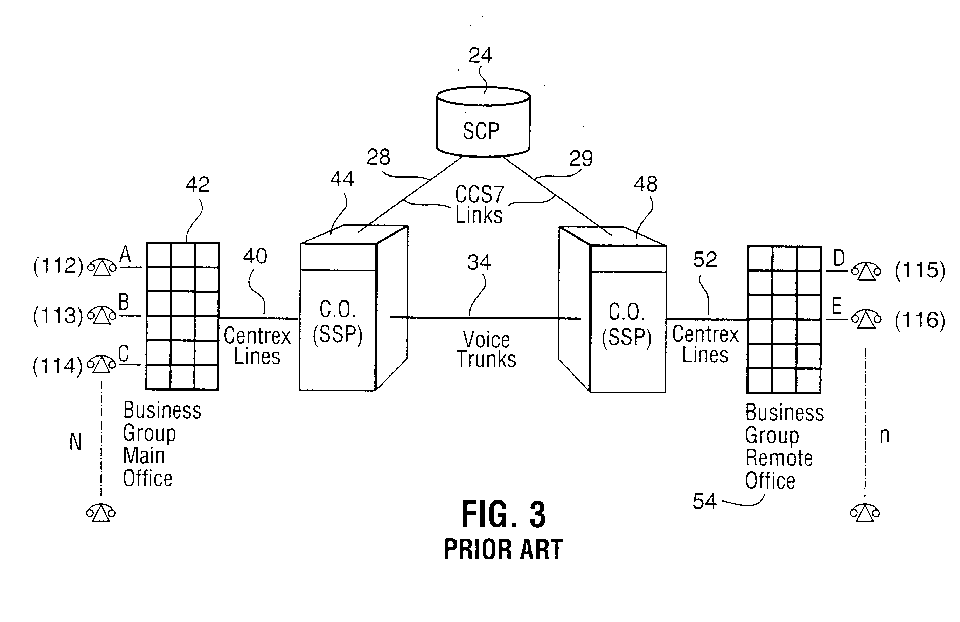

In Figure 3, there is shown a prior art AIN telephone network offering area wide Centrex to business group members connected to a business group main office 42, and a business group remote office 54. Business group main office 42 and business group remote office 54 are connected to their respective central offices (SSPs) 44, 48 by means of Centrex lines 40, 52. Central office 44 and central office 48 are connected to each other by voice trunks 34, which carry large numbers of telephone calls between the central offices. A plurality (N) of business group members are shown connected by ordinary telephone lines to the business group main office. Likewise, a number (n) of remote business group members are shown being connected by ordinary telephone lines to the business group remote office 54. For the sake of simplicity, mated pairs of STPs between central office 44 and SCP 24 are not shown in Figure 3.

With respect to the prior art telephone network illustrated in Figure 3, the following steps are followed when business group member using line A wishes to call remote business group member using line D at extension '115.' First, central office 44 responds to the off-hook status of line A and checks a translation table to determine whether the line that went off-hook subscribes to area wide centrex service. If it is not an area wide centrex line, central office 44 receives the dialled digits and executes normal call processing routines.

If the call originates with an area wide centrex line, central office 44 receives the dialled digits '115', suspends further call processing, and sends a query message to SCP 24 in TCAP format across CCS7 links 28. Typically, SCP 24 offers network services to a wide geographic area, such as a province or state. Stored within SCP 24 is a table that associates extension '115' with a telephone number of ordinary length, such as seven or ten digits. SCP 24 formulates an appropriate response message in TCAP format (including the complete telephone number of remote line D), and transmits the response message back to central office 44 via CCS7 links 28. Central office 44 would then use the contents of the response message to complete the call to central office 48 across voice trunks 34.

Of course, the CCS7 network between central office 44 and SCP 24 is not designed solely to transport Centrex data. As the demand for sophisticated network services has increased, traffic on CCS7 links 28, 29 has also increased. In some networks, the capacity of CCS7 links has been exceeded. As well, SCP 24 is not designed solely as a repository for Centrex data. Each network service enabled by the AIN network requires database memory at SCP 24. As advanced network services such as caller ID and LNP become more popular with consumers, SCP database storage requirements and CCS7 network capacity will have to be increased. Furthermore, the prior art AIN network illustrated in Figure 3 requires the intervention of the telephone company in order to modify the Centrex data. For example, the telephone company would have to reprogram the SCP in response to a customer request to add, delete or alter Centrex data. This is particularly inconvenient where a business customer wishes to make frequent, temporary changes to Centrex data to accommodate business travel, work at home arrangements, etc.

For the above reasons, it was determined that it would be more efficient to migrate Centrex data from an SCP in a CCS7 network to a centralized Centrex translation server, which may be co-located at the customer's premises. Instead of using CCS7 links to transmit AIN TCAP query messages, query messages would instead be sent via the Internet or a private Intranet in Transmission Control Protocol/Internet Protocol (TCP/IP) protocol. TCP/IP defines formats and rules for the transmission and receipt of information independently of any given network organization or computer hardware. TCP/IP is the protocol which governs the transmission and delivery of data packets across the Internet or an Intranet.

The advantages of using such a centralized Centrex translation server to house Centrex data are apparent when one considers the consequent reduction in CCS7 traffic, and decreased storage requirements at the SCP. As well, a provisioning interface through the World-Wide Web (WWW) is provided that will enable customers to rapidly re-program the Centrex data in response to new business conditions.

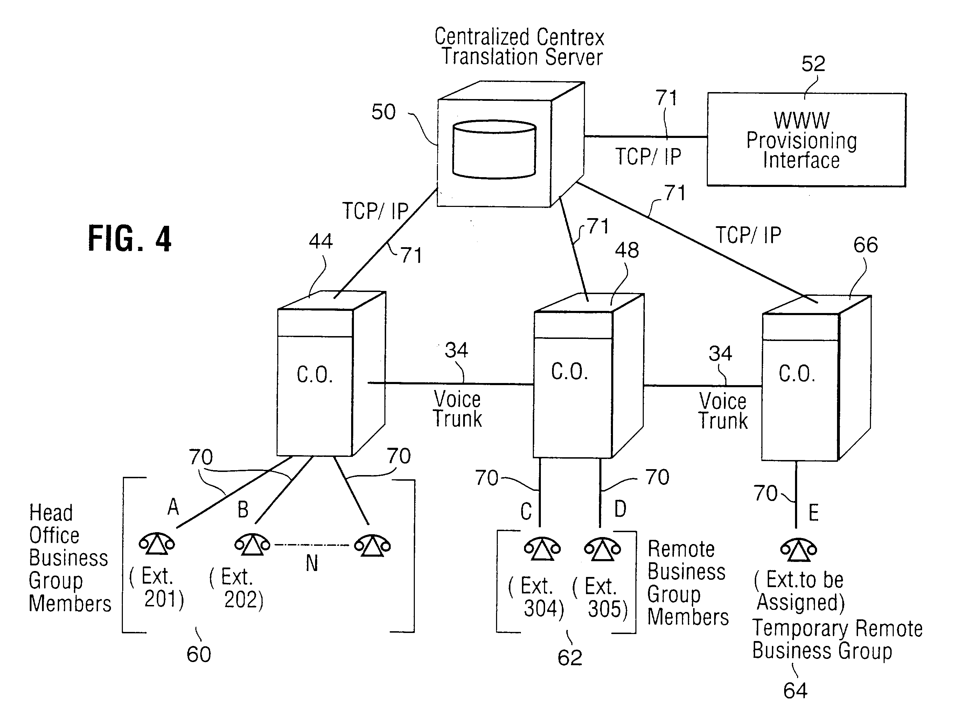

Figure 4 is a block diagram of a telephone network offering Centrex services in accordance with the present invention. It is understood that central offices 44, 48 and 66 may be connected to a CCS7 network that includes network elements such as mated pairs of STPs and at least one SCP, as shown in Figure 1. However, for the sake of simplicity, these network elements are not shown in Figure 4. A number (N) of head office business group members 60 are shown being connected by ordinary telephone lines 70 to central office 44, which is connected to central office 48 by means of voice trunks 34. Central office 48 is connected by ordinary telephone lines 70 to remote business group members 62. A temporary remote business group 64 is shown connected by ordinary telephone lines 70 to central office 66, which is connected by voice trunks 34 to central office 48.

A centralized Centrex translation server 50 (hereinafter referred to as "Centrex Server") is shown being connected by communication links 71 to central offices 44, 48, and 66. The TCP/IP protocol is used for communications between Centrex Server 50 and central offices 44, 48, and 66 over communication links 71. In the embodiment illustrated in Figure 4, communication links 71 can be ordinary telephone lines (over which Internet traffic can be passed), or dedicated trunks that form part of an Intranet. Communication links 71 should be designed to guarantee sufficient bandwidth to accommodate messaging traffic between Centrex Server 50 and central offices 44, 48, and 66.

The positioning of Centrex Server 50 in Figure 4 is for illustration purposes only. Whereas in the preferred embodiment, Centrex Server 50 would be co-located with head office business group members 60, it could be placed at any location with TCP/IP access. Alternatively, Centrex Server 50 could be co-located with a server operated by an Internet Service Provider (ISP).

One of the Centrex features enabled by the present invention is known as extension number translation. It permits business group members (whether their extensions are connected to the same central office or to separate central offices) to telephone each other by dialing an extension number that has fewer digits than a regular telephone number used by the telephone network to switch calls. This feature is enabled because Centrex Server 50 contains a database associating business group extension numbers with NANP numbers. For example, line A could be assigned the extension number '201', whereas the actual telephone number in NANP format may be (212) 555-0000, which bears no direct relationship to the extension number. Alternatively, a line's extension number could be a selected subset of the digits of the actual telephone number. For example, line B could be assigned extension number '202", whereas the line's actual telephone number could be (212) 555-0202.

To call business group member using line B, business group member using line A would only have to dial the extension number '202'. Translations in Centrex Server 50 would provide the full number (212) 555-0202, which would be used by central office 44 to complete the call. Similarly, to call business group member C, business group member using line A would only have to dial extension '304'.

To operate in accordance with the present invention, Centrex Server 50 must be capable of communicating over links using the TCP/IP protocol, decoding and encoding TCAP messages, and receiving and transmitting TCAP messages using the TCP/IP protocol. Centrex Server 50 can be implemented using a variety of platforms, such as UNIX™ and Windows NT™. Enhanced software such as the OMNI Soft Platform™ of DGMS Telecom, would provide TCAP functionality to Centrex Server 50. Configured in this manner, the Centrex Server 50 can receive TCAP message queries from any of central offices 44, 48, 66 over communication links 71 in TCP/IP format.

It is essential to the operation of the present invention that each business group member be assigned one of a number of AIN triggers in the originating call model such as "Off-hook Immediate" or Off-hook Delay." The aforementioned triggers are used to launch a query to Centrex Server 50 immediately after a business group member picks up a telephone. However, any AIN trigger used to launch a query to Centrex Server 50 before Central Office (SSP) 44, 48, 66 attempts to translate the dialled digits would function in accordance with the present invention.

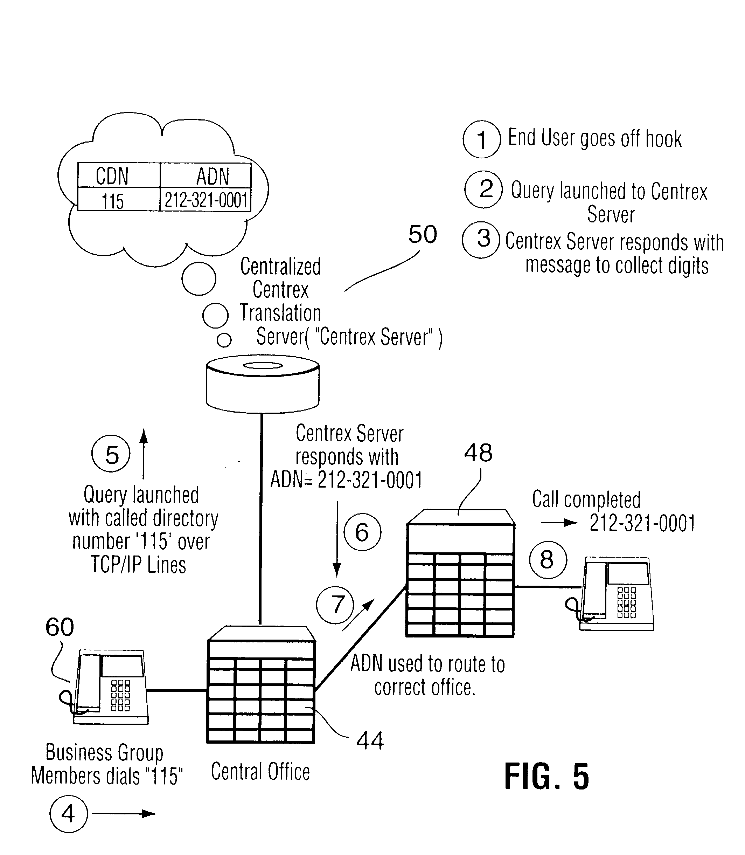

Figure 5 is a block diagram that shows the steps of call progression in accordance with the present invention, as follows. It is understood that central offices 44, 48 may be connected to a CCS7 network that includes network elements such as mated pairs of STPs and at least one SCP, as shown in Figure 1. However, for the sake of simplicity, these network elements are not shown in Figure 5.
1. Business group member 60 goes off-hook.
2. A query is sent by central office 44 to Centrex Server 50 in TCP/IP format.
3. Centrex Server 50 responds over the Internet (or Intranet) in TCP/IP format to central office 44 with instructions on digit collection based on Centrex Server's knowledge of the dialing plan of the business group to which business group member 60 belongs.
4. Business group member 60 dials '115'
5. A query is launched by central office 44 over the Internet in TCP/IP format with called directory number '115'.
6. Centrex Server 50 associates called directory number '115' with actual directory number (ADN) '212-321-0001' and transmits that ADN to central office 44.
7. ADN 212-321-0001 is used to route the call to the correct central office 48.
8. The call is completed.

Of course, it is understood that central office 48 would not be required to complete the call if the called party having extension number '115' were serviced by central office 44. A similar procedure would be followed if the called directory number was in the form of "9" + seven or ten digits. In that case, Centrex Server 50 would respond with the seven or ten digit telephone number in step 6 above.

The use of a Centrex Server has added benefits with respect to the handling of incoming calls. Typically, business group members using Centrex can be reached by members outside the business group by dialing one main directory number. By making use of AIN, the Centrex Server can provide "hunt group" type services. A hunt group is a list of telephone numbers to which an incoming call is forwarded. If the first number on the list is busy or there is no answer, the next number in the list is attempted, and so on until the list is exhausted. Hunt groups can be implemented with a Centrex Server by usage of AIN 0.2 capabilities of NextEventLists and O-NA (No Answer) and O-CPB (Called Party Busy) events. When an incoming call to the business group's main directory number triggers a TAT (Termination Attempt), a query is launched to Centrex Server 50. Centrex Server 50 then sends a response indicating that the O-NA and O-CPB events are to be "armed" in the Next Event List (NEL). Centrex Server 50 then sends the first number of the hunt group to an SSP in the form of a Forward Call response. If the first number is busy or there is no answer, then the SSP notifies Centrex Server 50 that O-NA or O-CPB has occurred. Centrex Server 50 will then return the next number in the hunt group. If no answer or busy continues to the end of the hunt group list, Centrex Server 50 could be programmed to either loop through the hunt group again, or send the call to a voicemail/IVR (Integrated Voice Response) system. Of course, Centrex Server 50 could use different hunt group lists for an incoming call based on the calling number. For example, if a calling party with directory number 6137658888 calls the business group, the hunt group employed could first direct the incoming call to a particular business group member who is known to deal with that calling party, and if the line is busy or there is no answer, the call could be directed to a second person in the hierarchy who is known to the calling party, and so on.

Among the hunt group services enabled by the present invention is E-mail notification of incoming call. E-mail notification is used when a hunt group has been exhausted and the call has not been answered. E-mail notification can be used to inform a business group members that a call was received, but not answered.

Full Centrex functionality can be provisioned in the Centrex Server used in accordance with the present invention. In addition to the extension number dialing feature described in detail above, the Centrex services offered by Centrex Server include Call Forward (on busy, no answer, and/or immediate), private trunking, toll carrier selection, incoming call screening, feature access codes.

In the prior art system illustrated in Figure 3, changes to Centrex data had to be made manually by a telephone company technician. Specifically, a technician operating at SCP 24 would enter changes in the assignment of extension numbers to corresponding telephone numbers in NANP format. Typically, the customer would ask the telephone company for a change, and the operating company would issue a service order to the technician for each change. Using an interface terminal of some sort, the technician would then enter the changes in the database.

One of the main benefits of the present invention is that it provides business group members with increased flexibility over Centrex data. Referring back to Figure 4, a world-wide web (WWW) provisioning interface 52 is provided so that rapid changes to Centrex data can be made by customers over the Internet without telephone company assistance. Typically, the WWW provisioning interface 52 would take the form of a web page with direct access to Centrex data stored within the Centrex Server 50. If a business group member was switching locations within the business group, the Centrex database associating extension numbers with NANP numbers could be quickly changed so that the business group member could retain the same extension number at the new location. Likewise, additions and deletions to the Centrex database can be easily made to accommodate changes to business group member personnel. Alternatively, changes to the Centrex data could be made via telephone by the inputting of specified feature access codes recognized by Centrex Server 50.

A further benefit to the present invention is that it enables temporary changes to be made to Centrex data to accommodate work-at-home scenarios. To accommodate temporary changes, a business group member would have to use the WWW provisioning interface 52 (or input feature access codes by telephone as described above) to update the Centrex Server database concerning the new directory number associated with that business group member. This means that the seven or ten digit directory number associated with that business group member's extension number would be changed to reflect the directory number of business group member's home, or temporary location. Referring to Figure 4, to receive and originate calls as if the business group member were still located at head office 60, Centrex Server 50 will need to instruct the Central Office switch 66 that services the business group member's temporary location to activate the necessary AIN triggers to that line E. The activation and deactivation of AIN triggers is documented in section 2.6.1.2.2 in TR-NWT-001284 of the AIN 0.1 Generic Requirements.

For example, the business group member who normally uses line B may wish to temporarily work at home through line E connected to central office 66. By using the WWW provisioning interface 52 (or by inputting feature access codes by telephone), extension number '202' could be temporarily assigned to line E. Upon making such a request, Centrex Server 50 would instruct central office 66 to activate the necessary AIN trigger (such as the off-hook immediate trigger) to line E. Centrex Server 50 would then modify the Centrex database associating extension numbers with NANP numbers to replace the NANP number for line B, with the NANP number for line E. Thereafter, line E would be assigned extension number '202', and would operate as if it were co-located with head office business group members 60.

When business group member temporarily assigned to line E returns to head office, the WWW provisioning interface 52 (or feature access codes) would be used to re-assign extension number '202' to line B. Centrex Server 50 would then deactivate the AIN trigger previously assigned to Central Office 66.

In addition to basic Centrex features described above, Computer Telephony Integrated (CTI) services could be enabled by the present invention. CTI services, such as computer screen pop-up windows, can be sent from Centrex Server 50 to a user upon receipt of an incoming call. The screen pop-up window may include customer information, etc., regarding the incoming call.

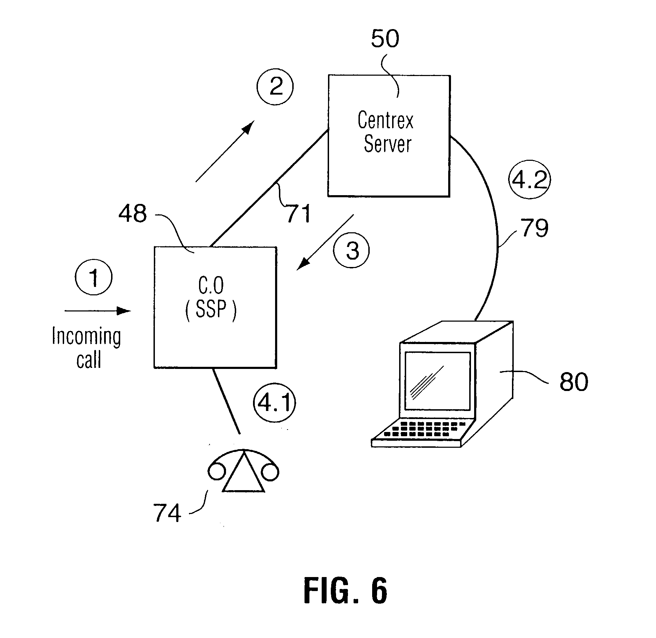

Figure 6 is a block diagram of call progression for the delivery of CTI services implemented in accordance with the Centrex Server 50 of the present invention. In the preferred embodiment, a database table would be stored at Centrex Server 50 that would associate customer information and other information with the directory number of the calling party. Using AIN, the directory number of the calling party would be transmitted from Central Office 48 that receives the call, to Centrex Server 50 where the customer database information was maintained. Customer database information would then be transmitted from the Centrex Server 50 to personal computer 80 having a monitor or other display device via a TCP/IP message over link 79 through the Internet or an Intranet.

At step 1, an incoming call to a business group's directory number encounters the AIN trigger Termination Attempt (TAT) at Central Office (SSP) 48. Assignment of the TAT trigger against the business group (to which business group member 74 belongs) is necessary for the delivery of CTI services implemented in accordance with the Centrex Server 50 of the present invention. That is, there would be one single directory number assigned to the business group as a whole. This directory number is a virtual number, which is not connected to a physical phone.

Central Office 48 determines that business group member subscribes to the service enabled by the present invention, and at step 2, launches an AIN TCAP query to Centrex Server 50 over communication link 71 using the TCP/IP protocol. At step 3, Centrex Server 50 returns a query response to central office 48, to enable proper routing of the call. At step 4.1, the call is routed to business group member 74, and simultaneously at step 4.2, a TCP/IP message is transmitted to personal computer 80. That TCP/IP message would contain customer information, etc. concerning the incoming call. The customer information would assist business group member 74 to better understand the nature of the call and the identity of the customer.

Hunt group service could also be dynamic, such that only available members of the business group would be included in a hunt group list. A business group member would be considered available if his/her telephone extension was on-hook, ready to receive an incoming call. To provide a dynamic hunt group, the centrex server 50 would have to be updated with any change in the on-hook/off-hook status of the extension number lines in the business group. By the use of a CTI program, or a hardware card, both o which would be resident at personal computer 80, the on-hook/off-hook status of all business group members within the business group can be polled on a continuous basis. Any change in the on-hook/off-hook status of a business group member would be transmitted via TCP/IP link 79 to centrex server 50, which would update its hunt group in accordance with the latest status of business group members.

The above description of a preferred embodiment should not be interpreted in any limiting manner since variations and refinements can be made without departing from the spirit of the invention. The scope of the invention is defined by the appended claims and their equivalents.

## Claims

1. A centrex system comprising a group of telephone subscribers forming a business group connected by local telephone lines to a central office, said central office being connected by at least one communication link to a centrex server containing centrex information about said business group, and wherein said centrex server transmits centrex information to said central office over said communication link in TCP/IP format in response to a request made by said central office.

2. A centrex system as claimed in claim 1 wherein said centrex server contains a database storing the centrex information as extension numbers for the business group associated respectively with directory numbers in National Numbering Plan (NANP) format.

3. A centrex system as claimed in claim 1 or 2, wherein at least one of an AIN "off-hook immediate" trigger and an "off-hook delay" trigger is assigned to each of said local telephone lines.

4. A centrex system as claimed in any preceding claim wherein a remote central office connected to said central office by voice trunks, and connected via at least one communication link to said centrex server, is connected by local telephone lines to a remote subscriber forming part of the business group, and wherein, in response to a request made by said remote central office, said centrex server transmits centrex information to said remote central office over said communication link in TCP/IP format.

5. A centrex system as claimed in any preceding claim wherein said centrex information comprises a hunt group list of directory numbers in NANP format, and wherein in response to an incoming call received by said central office, said central office initiates a request for centrex information to said centrex server, said centrex server returning to said central office the first directory number in said hunt group list, and whereby if said central office cannot complete the call using said first directory number, said centrex server returns the second directory number in said hunt group list, and so on until the call is completed or said hunt group list is depleted, whichever comes first.

6. A method of providing centrex services to a calling party in an AIN-type telecommunications network that includes at least one central office switch having service switching point capability to which terminal equipment of a calling party is connected and a centrex server capable of exchanging data with said central office over communication links; said method comprising the steps of:
a. monitoring at said central office switch a condition to detect a request for centrex service through AIN interaction;
b. formulating at said central office switch a query request in accordance with said request for centrex service;
c. forwarding said query request to said centrex server over said communication links in TCP/IP format;
d. processing said query request at said centrex server and generating a centrex response message;
e. forwarding said centrex response message to said central office switch over said communication links in TCP/IP format; and
f. using said centrex response message to complete a call.

7. A method as claimed in claim 6 wherein said condition to detect a request for centrex service through AIN interaction occurs during any one of an AIN "off-hook immediate" trigger and "off-hook delay" trigger.

8. A method as claimed in claim 6 or 7 wherein said condition to detect a request for centrex service through AIN interaction occurs in response to an incoming call received by said central office.

9. A method as claimed in claim 6, 7 or 8 wherein said centrex server contains a hunt group list of directory numbers in NANP format, and wherein said centrex response message includes the first directory number in said hunt group list, and whereby if said central office cannot complete the call using said first directory number, said centrex server returns the second directory number in said hunt group list, and so on until the call is completed or said hunt group list is depleted, whichever comes first.

10. A method as claimed in claim 6, 7, 8, or 9 whereby said centrex server is connected to a processor, said method including the steps of:
said processor collecting poll information concerning the on-hook/off-hook status of lines associated with the directory numbers comprising said hunt group list;
said processor transmitting said poll information to said centrex server; and
said centrex server updating said hunt group list.
